Europäisches Patentamt

European Patent Office

Office européen des brevets

(11) Veröffentlichungsnummer: **0 013 709**
**A1**

(12) # EUROPÄISCHE PATENTANMELDUNG

(21) Anmeldenummer: **79104701.2**

(22) Anmeldetag: **27.11.79**

(51) Int. Cl.³: **G 06 K 15/02**, G 06 F 3/12,
G 01 D 15/00, H 04 L 21/00,
H 04 N 1/22

(30) Priorität: **18.01.79 DE 2901798**

(43) Veröffentlichungstag der Anmeldung: **06.08.80**
**Patentblatt 80/16**

(84) Benannte Vertragsstaaten: **AT BE DE FR GB IT LU NL SE**

(71) Anmelder: **ROBERT BOSCH GMBH, Postfach 50,
D-7000 Stuttgart 1 (DE)**

(72) Erfinder: **Gorzel, Heribert, Dipl.-Ing., Forstweg 33 c,
D-1000 Berlin 28 (DE)**
Erfinder: **Köhler, Horst, Dipl.-Ing., Skarbinastrasse 88,
D-1000 Berlin 49 (DE)**

(74) Vertreter: **Schmidt, Hans-Ekhardt, Robert Bosch GmbH
Geschäftsbereich Elektronik Patent- und
Lizenzabteilung Forckenbeckstrasse 9-13,
D-1000 Berlin 33 (DE)**

(54) Verfahren zum Aufzeichnen einer aus einer Vielzahl alphanumerischer Zeichen bestehenden Information.

(57) Es wird ein Verfahren vorgeschlagen, das zum Aufzeichnen einer aus einer Vielzahl von alphanumerischen Zeichen bestehenden Information auf einem bandförmigen Aufzeichnungsträger dient. Die aufzuzeichnende Information wird in Zeilen aufgeteilt, die parallel zur Bewegungsrichtung des Aufzeichnungsträgers liegen.

EP 0 013 709 A1

ACTORUM AG

2/79
EK/PLI Scht/Sh
16. Januar 1979

ROBERT BOSCH GMBH, 7000 Stuttgart

## Verfahren zum Aufzeichnen einer aus einer Vielzahl alphanumerischer Zeichen bestehenden Information

### Stand der Technik

Die Erfindung geht aus von einem Verfahren nach der Gattung des Hauptanspruchs.

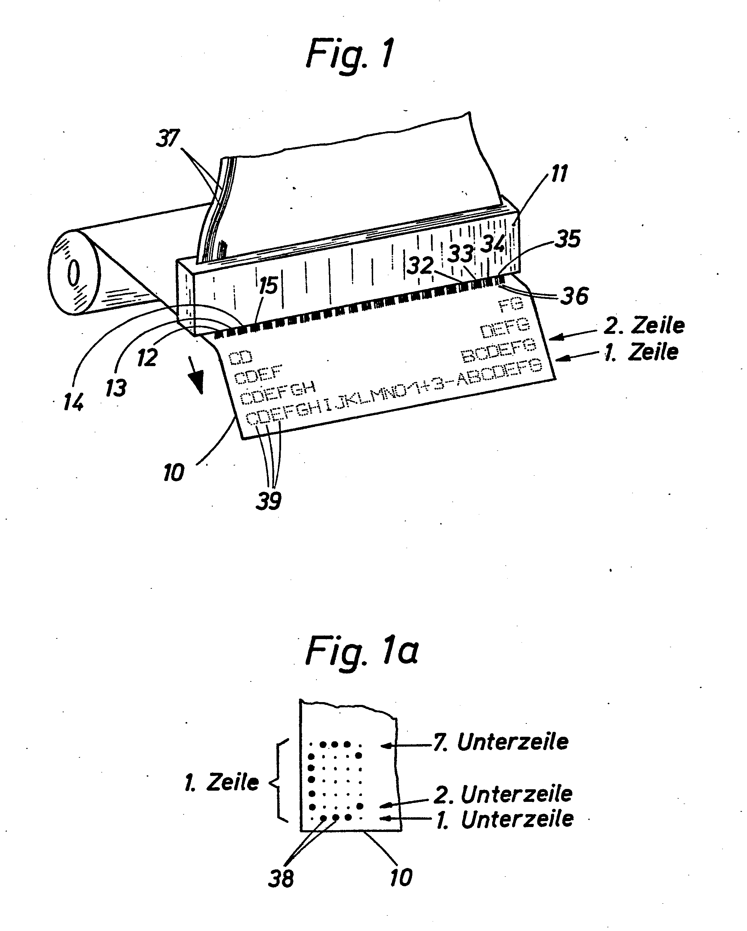

Es ist schon eine Vorrichtung zum Aufzeichnen von aus alphanumerischen Zeichen bestehenden Informationen bekannt (Electronics, 26. Oktober 1978, Seite 23 E). Bei den bekannten Verfahren und Vorrichtungen zum Aufzeichnen wird ein verhältnismäßig breiter bandförmiger Aufzeichnungsträger 10 (vergleiche Figur 1) an einer Aufzeichnungseinheit 11 in Pfeilrichtung vorbeigeführt. Eine quer zur Bewegungsrichtung des Aufzeichnungsträgers angeordnete Aufzeichnungseinheit 11 trägt zum Beispiel vierundzwanzig Aufzeichnungsorgane 12 bis 35 mit je fünf Aufzeichnungselementen 36. Insgesamt umfaßt die Aufzeichnungseinheit somit einhundertzwanzig kammartig angeordnete Aufzeichnungselemente. Jedes Aufzeichnungselement ist über eine eigene Leitung 37 ansteuerbar.

Die jeweils angesteuerten Aufzeichnungselemente erzeugen auf dem Aufzeichnungsträger 10 je eine punktförmige Aufzeichnung 38 (vergleiche Figur 1 a). Zur
Darstellung je eines alphanumerischen Zeichens 39
werden die Aufzeichnungselemente in einer bestimmten
Kombination angesteuert, zum Beispiel nach Art eines
Mosaikrasters von 7 X 5 Punkten; vergleiche Figur 1 a.

Die Aufzeichnung geht derart vor sich, daß zunächst
nur die Punkte 38 der ersten Unterzeile der ersten
Zeile aufgezeichnet werden. Danach wird der Aufzeichnungsträger in Pfeilrichtung um eine Unterzeile weiterbewegt, so daß die Punkte der zweiten Unterzeile der
ersten Zeile aufgezeichnet werden können usw. bis
schließlich die siebente Unterzeile und damit die
erste Zeile (vergleiche Figur 1) vollständig aufgezeichnet ist. Das Aufzeichnen der zweiten bis vierten
Zeile erfolgt dann in analoger Weise.

Die Aufzeichnung setzt bei diesem Verfahren eine Aufzeichnungseinheit 11 mit einhundertzwanzig Aufzeichnungselementen mit ebenso vielen Steuerleitungen voraus.
Die Zeilenlänge ist durch die Breite des Aufzeichnungsträgers begrenzt.

## Vorteile der Erfindung

Das erfindungsgemäße Verfahren mit den kennzeichnenden
Merkmalen des Hauptanspruchs hat den Vorteil, daß zum
Aufzeichnen einer die gleiche Zahl von Zeichen umfassenden
Information wie bei dem Verfahren nach Figur 1 erheblich
weniger Aufzeichnungsorgane, Aufzeichnungselemente und
Ansteuermittel nötig sind, wodurch sich die Aufzeichnungsvorrichtung kompakter aufbauen läßt. Dieser Vorteil ist insbesondere für den Einsatz einer Aufzeichnungsvorrichtung in Kraftfahrzeugen von ausschlaggebender Bedeutung.

## Zeichnung

Je eine Aufzeichnungseinheit zur Durchführung des bekannten Verfahrens und des erfindungsgemäßen Verfahrens ist in der Zeichnung anhand je einer Figur dargestellt. Die Zeichnung zeigt in

Figur 1    eine perspektivische Ansicht einer bekannten Aufzeichnungseinheit mit daran vorbeigeführtem Aufzeichnungsträger,

Figur 1 a    einen stark vergrößerten Ausschnitt aus dem Aufzeichnungsträger für die Aufzeichnungseinheit nach Figur 1,

Figur 2    eine perspektivische Ansicht einer erfindungsgemäßen Aufzeichnungseinheit mit daran vorbeigeführtem Aufzeichnungsträger und

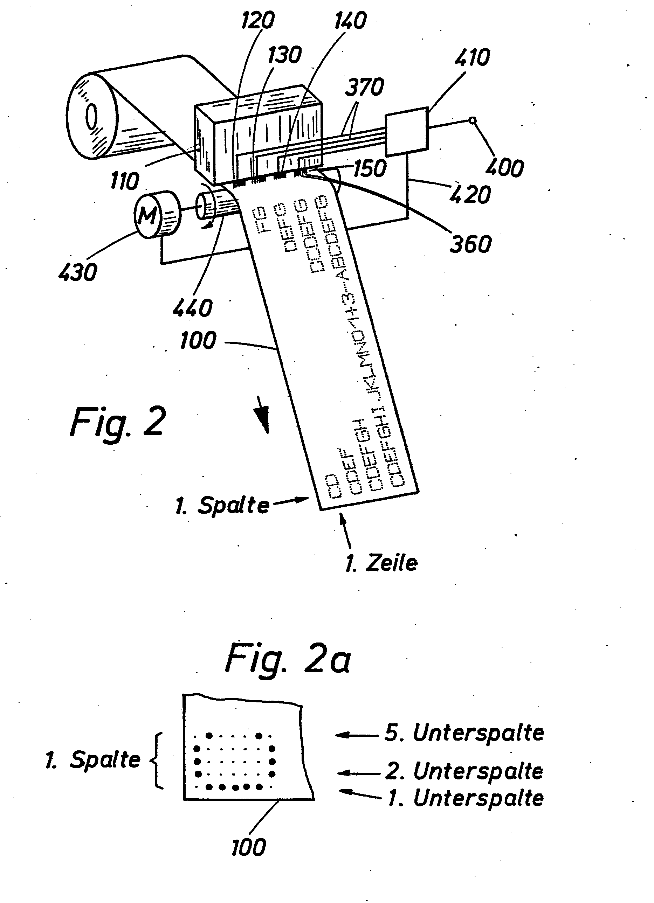

Figur 2 a    einen stark vergrößerten Ausschnitt aus dem Aufzeichnungsträger für eine Aufzeichnungseinheit nach Figur 2.

Bei dem erfindungsgemäßen Verfahren ist ein bandförmiger Aufzeichnungsträger 100 im Vergleich zu dem bekannten Ausführungsbeispiel nach Figur 1 verhältnismäßig schmal, weil für die Aufzeichnung der gleichen Information wie in Figur 1 (vier Zeilen zu je vierundzwanzig Zeichen) nur vier Aufzeichnungsorgane 120, 130, 140 und 150 mit je sieben Aufzeichnungselementen 360 nötig sind.

Die Aufzeichnung geht hierbei vorzugsweise folgendermaßen vor sich. An einem Eingang 400 einer Steuerungseinheit 410 treffen beispielsweise in kontinuierlicher Folge die Signale  für die aufzuzeichnenden alphanumerischen Zeichen in kodierter Form, zum Beispiel im ASCII-Code, ein. Die

Steuerungseinheit sorgt dafür, daß diese Signale umkodiert
werden und die Aufzeichnungselemente 360 in der richtigen
Weise, das heißt zur richtigen Zeit, angesteuert werden.
In Figur 2 sind der Übersichtlichkeit halber jeweils fünf
Steuerungsleitungen zu einer Steuerungsleitung 370 zusammengefaßt. Eine weitere Aufgabe der Steuerungseinheit 410
besteht darin, die Bewegung des Aufzeichnungsträgers 100 zu
steuern. Hierzu wird über eine Leitung 420 ein Motor 430
angesteuert, der eine mit dem Motor gekuppelte Antriebswelle 440 in Umdrehungen versetzt.

Im einzelnen werden bei der Aufzeichnungseinrichtung nach
Figur 2 zuerst die Punkte der ersten Unterspalte (vergleiche Figur 2 a) der ersten Spalte aufgezeichnet. Jedes
Zeichen setzt sich aus einer bestimmten Punktkombination
eines fünf Unterspalten zu je sieben Punkten umfassenden
Punktrasters zusammen, und je fünf quer zur Bewegungsrichtung des Aufzeichnungsträgers 100 liegende Unterspalten
bilden jeweils eine Spalte der Aufzeichnung.

Beispielsweise werden bei einem fortlaufenden Text die
Signale von einer zentralen Funkstation aus als Modulation
eines Hochfrequenzträgers zu einer Funkstation mit der
Aufzeichnungseinrichtung nach Figur 2 übertragen, wobei die
Signale derart informationsblockweise geordnet werden, daß
jeweils ein Block die Signale einer aufzuzeichnenden Zeile
umfaßt.

Nach dem Empfang und der Demodulation dieser Signale werden
diese in der Steuerungseinheit zwischengespeichert. Vorzugsweise ein Mikroprozessor übernimmt dann die Aufgabe, beim
Auslesen des Speichers dafür zu sorgen, daß jeder Informationsblock mit den Signalen des Zeilenanfangs oder Zeilenendes der ersten Unterspalte beginnt und daß die Zeilen
etwa gleich viele Zeichen umfassen.

Bei dem vorstehend beschriebenen Verfahren hat eine
Information immer eine bestimmte durchschnittliche
Länge, die bei einer vorgegebenen Zeilenzahl zu einer
bestimmten Länge auf dem Aufzeichnungsträger führt.
Soll ausnahmsweise eine Information übertragen werden,
die länger ist als die üblichen Informationen, so
müßte diese in zwei oder mehrere Informationen (Telegramme) aufgeteilt werden, was keinerlei Schwierigkeiten bereitet.

Es sei noch erwähnt, daß das erfindungsgemäße Verfahren
nicht nur zur Aufzeichnung alphanumerischer Zeichen,
sondern auch zum punktweisen Aufzeichnen von Bildinhalten (Faksimileaufzeichnung) geeignet ist. Hierzu
bedarf es lediglich eines Umbaus der Steuerungs- und
der Aufzeichnungseinheit, den der Fachmann durchführen
kann. Da die beim Abtasten einer Bildvorlage erhaltenen
Signale in der richtigen Reihenfolge am Eingang 400 der
Steuerungseinrichtung eintreffen, entfällt jegliche
Zwischenspeicherung und Umkodierung.

0013709

ROBERT BOSCH GMBH, 7000 Stuttgart

Ansprüche

1. Verfahren zum Aufzeichnen einer aus einer Vielzahl alphanumerischer Zeichen bestehenden Information auf einem bandförmigen Aufzeichnungsträger, der an einer Aufzeichnungseinheit vorbeigeführt wird, die mehrere auf einer quer zur Bewegungsrichtung des Aufzeichnungsträgers liegenden Geraden angeordnete Aufzeichnungsorgane aufweist, von denen jedes derart ansteuerbar ist, daß es ein beliebig wählbares Zeichen auf dem Aufzeichnungsträger aufzeichnen kann, dadurch gekennzeichnet, daß die Information auf eine von der Breite des Aufzeichnungsträgers (100) abhängige bestimmte Zahl von parallel zur Bewegungsrichtung des Aufzeichnungsträgers liegenden Zeilen aufgeteilt wird, wobei die eine der Zeilenzahl entsprechende Zahl von Aufzeichnungsorganen (120, 130 ...) aufweisende Aufzeichnungseinheit (110) gleichzeitig mit dem Aufzeichnen des ersten oder letzten Zeichens aller Zeilen beginnt und das Aufzeichnen der sich daran anschließenden Zeichen in einem für alle Zeilen gleichen Takt fortsetzt.

2. Verfahren nach Anspruch 1, dadurch gekennzeichnet, daß die zu einer Information gehörenden Zeilen im wesentlichen die gleiche Zeilenlänge aufweisen.

0013709

# Fig. 1

FG
DEFG
BCDEFG
— 2. Zeile
— 1. Zeile

CD
CDEF
CDEFGH
CDEFGHIJKLMN01+3-ABCDEFG

# Fig. 1a

7. Unterzeile

1. Zeile {

2. Unterzeile
1. Unterzeile

38        10

**Fig. 2**

1. Spalte

1. Zeile

**Fig. 2a**

1. Spalte {

← 5. Unterspalte

← 2. Unterspalte

← 1. Unterspalte

## EINSCHLÄGIGE DOKUMENTE

| Kategorie | Kennzeichnung des Dokuments mit Angabe, soweit erforderlich, der maßgeblichen Teile | betrifft Anspruch |
|-----------|---------------------------------------------------------------------------|-------------------|
| X | <u>DE - B2 - 2 362 938</u>  (MEAD CORP.) | 1 |
|   | + Spalte 4, Zeile 11 - Spalte 5, Zeile 20; Fig. 1 + | |
|   | -- | |
| X | <u>DE - A - 2 150 343</u>  (CARRUS) | 1,2 |
|   | + Seite 2, Zeile 15 - Seite 3, Zeile 18; Seite 4, Zeilen 9 bis 16; Seite 5, Zeilen 12 bis 19; Fig. 1,8-11 + | |
|   | -- | |
| A | <u>DE - B2 - 1 941 680</u>  (MEAD CORP.) | 1 |
|   | + Spalte 3, Zeile 67 - Spalte 5, Zeile 59; Spalte 7, Zeile 4 - Spalte 8, Zeile 25, Fig. 1,2,5 + | |
|   | -- | |
|   | <u>DE - A - 1 512 650</u>  (XEROX) | 1 |
|   | + Seite 10, Zeilen 17 - 28; Fig. 2,5,6 + | |
|   | -- | |
|   | <u>CH - A - 557 241</u>  (IBM) | 1 |
|   | + Spalte 1, Zeile 47 - Spalte 2, Zeile 8; Fig. 1,3C + | |
|   | -- | |
| X | <u>FR - A1 - 2 330 085</u>  (SOLARTRON) | 1,2 |
|   | + Seite 1, Zeile 19 - Seite 2, Zeile 10; Seite 2, Zeilen 15-27; Seite 3, Zeile 36 - Seite 4, Zeile 14; Fig. 2 + | |
|   | -- | |
|   | <u>FR - A - 2 219 588</u>  (T.E.A.M.) | 1 |
|   | + Seite 8, Zeile 32 - Seite 10, Zeile 8; Seite 14, Zeile 22 - Seite 15, Zeile 4; Fig.1,6, 7 + | |
|   | -- | |

**KLASSIFIKATION DER ANMELDUNG (Int.Cl.)** 3

G 06 K 15/02
G 06 F  3/12
G 01 D 15/00
H 04 L 21/00
H 04 N  1/22

**RECHERCHIERTE SACHGEBIETE (Int.Cl.)** 3

G 06 K
G 06 F
G 01 D
G 01 P
G 07 C
B 60 Q
H 04 L
H 04 N

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

| | | | |
|---|---|---|---|
| X | Der vorliegende Recherchenbericht wurde für alle Patentansprüche erstellt. | | |
| **Recherchenort** WIEN | **Abschlußdatum der Recherche** 25-02-1980 | **Prüfer** NEGWER | |

EPA form 1503.1   06.78

Europäisches
Patentamt

**EUROPÄISCHER RECHERCHENBERICHT**

0013709

Nummer der Anmeldung

EP 79104701.2

| | EINSCHLÄGIGE DOKUMENTE | | KLASSIFIKATION DER ANMELDUNG (Int. Cl.³) |
|---|---|---|---|
| Kategorie | Kennzeichnung des Dokuments mit Angabe, soweit erforderlich, der maßgeblichen Teile | betrifft Anspruch | |
| X | US – A – 3 715 762 (IBM) + Zusammenfassung; Spalte 3, Zeile 33 bis Spalte 4, Zeile 18; Figur 2 + ---- | 1 | |
| | | | RECHERCHIERTE SACHGEBIETE (int. Cl.³) |